# EUROPEAN PATENT APPLICATION

(11) **EP 4 836 523 A1**
(43) Date of publication of application: **04.11.2026**
(21) Application number: 24915116.8
(22) Date of filing: 18.12.2024
(51) Int. Cl.: H04W 36/14

(54) **NETWORK SYSTEM SWITCHING METHOD AND APPARATUS, STORAGE MEDIUM, AND ELECTRONIC APPARATUS**

(30) Priority: 05.01.2024 CN 202410019734
(71) Applicant: ZTE CORPORATION, Shenzhen, Guangdong 518057 (CN)
(72) Inventor: LI, Xiaodi, Shenzhen, Guangdong 518057 (CN)
(74) Representative: Chimini, Francesco
(86) International application number: PCT/CN2024/140399
(87) International publication number: WO 2025/145901

(57) **Abstract**

Provided are a method and apparatus for processing handover of a network system, a storage medium and an electronic device. The method includes: receiving handover information sent by a Mobility Management Entity (MME), wherein the handover information indicates that a network connection of a user equipment is to be handed over from a first network system to a second network system; receiving, based on the handover information, a voice session reconstruction request continuously sent by a Session Management Function (SMF); and sending, based on the received voice session reconstruction request, a handover request to a Serving Gateway (SGW), so that the SGW responds to the handover request and hands over the network connection of the user equipment from the first network system to the second network system.

## Description

### Cross-Reference to Related Application

The present disclosure is based on and claims the benefit of priority of Chinese Patent Application No. CN202410019734.8 filed on 05 January 2024 and entitled "Method and Apparatus for Processing Handover of Network System, Storage Medium and Electronic Device", the disclosure of which is incorporated herein by reference in its entirety.

### Technical Field

Embodiments of the present disclosure relate to the field of communications, and in particular, to a method and apparatus for processing handover of a network system, a storage medium and an electronic device.

### Background

Currently, for handling of exceptions in voice calls, a core network mainly notifies a forward network element to establish a voice dedicated bearer by means of message retransmission and multiple attempts. However, this manner has the following problems: when an exception of a forward network element is encountered during voice dedicated bearer establishment, repeated retries by an SMF prolong the entire voice flow time, affecting user experience. A network element in a first network system (e.g., an SGW or a PGW in a 4G network system) cannot receive a handover request from a forward network element, causing some network elements to remain operating under a second network system (e.g., a 5G network system) and ultimately failing to establish a voice call. Such abnormal cooperation between network elements causes the SMF to only repeatedly retry voice session establishment or wait, and cannot actively detect exceptions, resulting in a problem that a voice call cannot be quickly recovered.

### Summary

Embodiments of the present disclosure provide a method and apparatus for processing handover of a network system, a storage medium and an electronic device, so as to at least solve the problem in the related art that a voice session cannot be quickly recovered when an exception occurs in establishing the voice session.

According to one embodiment of the present disclosure, a method for processing handover of a network system is provided, applied to an Access and Mobility Management Function entity (AMF), including: receiving handover information sent by a Mobility Management Entity (MME), wherein the handover information indicates that a network connection of a user equipment is to be handed over from a first network system to a second network system; receiving, based on the handover information, a voice session reconstruction request continuously sent by a Session Management Function (SMF), wherein the voice session reconstruction request is a reconstruction request for a voice session request sent by the user equipment when a base station does not support establishment of a voice session with the first network system; and sending, based on the received voice session reconstruction request, a handover request to a Serving Gateway (SGW), so that the SGW responds to the handover request and hands over the network connection of the user equipment from the first network system to the second network system.

According to another embodiment of the present disclosure, an apparatus for processing handover of a network system is provided, including: a first receiving module configured to receive handover information sent by a Mobility Management Entity (MME), wherein the handover information indicates that a network connection of a user equipment is to be handed over from a first network system to a second network system; a first sending module configured to receive, based on the handover information, a voice session reconstruction request continuously sent by a Session Management Function (SMF), wherein the voice session reconstruction request is a reconstruction request for a voice session request sent by the user equipment when a base station does not support establishment of a voice session with the first network system; and a second sending module configured to send, based on the received voice session reconstruction request, a handover request to a Serving Gateway (SGW), so that the SGW responds to the handover request and hands over the network connection of the user equipment from the first network system to the second network system.

In an exemplary embodiment, the apparatus further includes: a first starting module configured to, before receiving, based on the handover information, the voice session reconstruction request continuously sent by the SMF, start, by the SMF, a first timer in response to determining that the base station does not support establishment of a voice session of a 5G network system; and a third sending module configured to, in response to a timing of the first timer exceeding a preset time, continuously send, by the SMF, the voice session reconstruction request to the AMF.

In an exemplary embodiment, the apparatus further includes: a fourth sending module configured to, after receiving the handover information sent by the MME, send the handover information to the SMF, to instruct the SMF to send the voice session reconstruction request.

In an exemplary embodiment, the apparatus further includes: a fifth sending module configured to, after sending, based on the received voice session reconstruction request, the handover request to the SGW, so that the SGW responds to the handover request and hands over the network connection of the user equipment from the first network system to the second network system, send, by the SGW, the voice session reconstruction request to a PGW; and a sixth sending module configured to, in response to receiving the voice session reconstruction request, send, by the PGW, the voice session request to the base station.

In an exemplary embodiment, the sixth sending module includes: a first associating unit configured to, in response to detecting that a cache includes the voice session request matching the voice session reconstruction request, associate, by the PGW, the voice session request and delete the voice session request from the cache; a first generating unit configured to re-generate, by the PGW, a target voice session request by using the associated voice session request and the voice session reconstruction request, and cache, by the PGW, the target voice session request; and a first sending unit configured to send, by the PGW, the target voice session request to the base station, to initiate reconstruction of the voice session request in the second network system.

In an exemplary embodiment, the first sending unit includes: a first starting sub-unit configured to start, by the PGW, a second timer; and a first sending sub-unit configured to send, by the PGW, the target voice session request to the base station according to triggering of the second timer.

In an exemplary embodiment, during a process in which the network connection of the user equipment is being handed over from the first network system to the second network system, in response to the user equipment initiating a Tracking Area Update (TAU), it is determined that the MME is in an abnormal state, wherein the MME being in the abnormal state includes that, when the user equipment initiates the voice session request for the first time, the MME does not send the voice session request to the SGW.

In an exemplary embodiment, the apparatus further includes: a seventh sending module configured to, after sending, in response to receiving the voice session reconstruction request, the handover request to the SGW, so that the SGW responds to the handover request and hands over the network connection of the user equipment from the first network system to the second network system, send, by the MME, a handover response message to the AMF, wherein the handover response message indicates that the network connection of the user equipment has been handed over to the second network system; and a first releasing module configured to release, by the AMF, based on the handover response message, the first network system to which the user equipment is connected.

In an exemplary embodiment, the second sending module includes: a second sending unit configured to, in response to a number of times that the AMF has received the voice session reconstruction request being greater than a preset threshold, send, by the AMF, the handover request to the SGW, so that the SGW responds to the handover request and hands over the network connection of the user equipment from the first network system to the second network system.

According to yet another embodiment of the present disclosure, a computer-readable storage medium is further provided, having a computer program stored therein, wherein the computer program is configured to, when being executed by a processor, implement steps of the method according to any one of the above method embodiments.

According to yet another embodiment of the present disclosure, an electronic device is further provided, including a memory and a processor, the memory having a computer program stored therein, wherein the processor is configured to execute the computer program to implement steps of the method according to any one of the above method embodiments.

### Brief Description of the Drawings

FIG. 1 is a hardware structural block diagram of a mobile terminal for a method for processing handover of a network system according to an embodiment of the present disclosure;
FIG. 2 is a flowchart of a method for processing handover of a network system according to an embodiment of the present disclosure;
FIG. 3 is a network structural diagram of a non-roaming scenario according to an embodiment of the present disclosure;
FIG. 4 is a flowchart of voice call fallback from a 5G network system to a 4G network system according to an embodiment of the present disclosure;
FIG. 5 is a flowchart of triggering voice dedicated bearer establishment after PDN reconstruction from a 4G network system according to an embodiment of the present disclosure;
FIG. 6 is a network structural diagram of a roaming scenario according to an embodiment of the present disclosure;
FIG. 7 is a flowchart of voice call fallback from a 5G network system to a 4G network system in a roaming scenario according to an embodiment of the present disclosure;
FIG. 8 is a flowchart of triggering voice dedicated bearer establishment after PDN reconstruction from a 4G network system in a roaming scenario according to an embodiment of the present disclosure; and
FIG. 9 is a structural block diagram of an apparatus for processing handover of a network system according to an embodiment of the present disclosure.

### Detailed Description of the Embodiments

Embodiments of the present disclosure will be described below in detail with reference to the accompanying drawings and in conjunction with the embodiments.

It should be noted that the terms "first", "second", and the like in the specification and claims of the present disclosure and the above-mentioned drawings are used to distinguish similar objects, and are not necessarily used to describe a specific order or sequence.

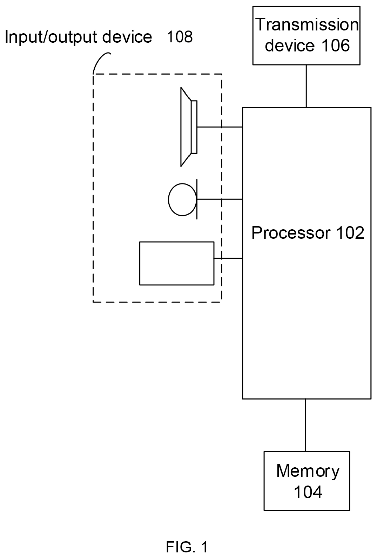

The method embodiments provided in the embodiments of the present disclosure may be executed in a mobile terminal, a computer terminal, or a similar computing device. Taking execution on a mobile terminal as an example, FIG. 1 is a hardware structural block diagram of a mobile terminal for a method for processing handover of a network system according to an embodiment of the present disclosure. As shown in FIG. 1, the mobile terminal may include one or more (only one is shown in FIG. 1) processors 102 (the processors 102 may include, but are not limited to, processing devices such as a microprocessor (MCU) or a programmable logic device (FPGA)) and a memory 104 for storing data, wherein the mobile terminal may further include a transmission device 106 and an input/output device 108 for communication functions. Those of ordinary skill in the art will understand that the structure shown in FIG. 1 is only schematic and does not limit the structure of the mobile terminal. For example, the mobile terminal may also include more or fewer components than those shown in FIG. 1, or have a configuration different from that shown in FIG. 1.

The memory 104 may be used to store a computer program, for example, a software program and a module of application software, such as a computer program corresponding to the method for processing handover of a network system in the embodiments of the present disclosure. The processor 102 executes various functional applications and data processing, i.e., implements the above method, by running the computer program stored in the memory 104. The memory 104 may include a high-speed random access memory, and may also include a non-volatile memory, such as one or more magnetic storage devices, a flash memory, or other non-volatile solid-state memories. In some examples, the memory 104 may further include a memory remotely located relative to the processor 102, and these remote memories may be connected to the mobile terminal via a network. Examples of the above network include, but are not limited to, the Internet, an intranet, a local area network, a mobile communication network, and combinations thereof.

The transmission device 106 is configured to receive or send data via a network. Specific examples of the above network may include a wireless network provided by a communication provider of the mobile terminal. In one example, the transmission device 106 includes a network adapter (Network Interface Controller, NIC for short), which may be connected to other network devices via a base station so as to communicate with the Internet. In one example, the transmission device 106 may be a Radio Frequency (RF for short) module, which is used to communicate with the Internet in a wireless manner.

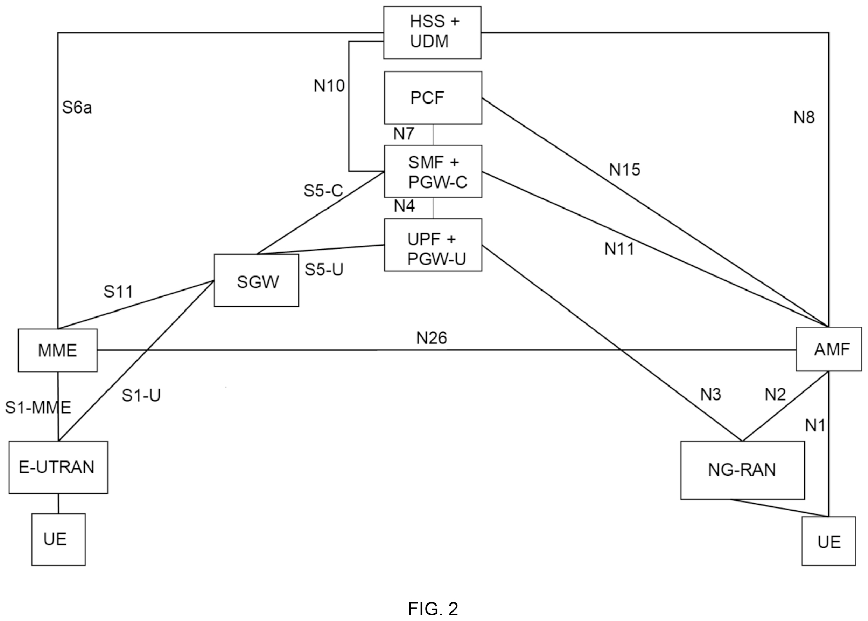

The network architecture among the various network elements in the method embodiments provided in the embodiments of the present disclosure is shown in FIG. 2. A UE (User Equipment) is connected to an AMF (Access and Mobility Management Function, an entity having access and mobility management functions). The AMF transmits location information of the UE to an MME (Mobility Management Entity, a key control node of an LTE access network under the 3GPP protocol). The MME establishes connections with an SGW (Service Gateway) and a PGW (PDN Gateway, Packet Data Network Gateway), and then communicates with the AMF to obtain data transmission requirements of the UE. Next, the MME negotiates a data path with the SGW and the PGW, and then reports establishment of the data path to the AMF. Finally, the AMF transmits data path information to the UE, so that the UE can establish connections with the SGW and the PGW and start data transmission. During the entire process, multiple interactions are performed among the UE, the AMF, the SMF (Session Management Function), the SGW, the MME, and the PGW to ensure smooth data transmission.

In an embodiment, the interaction process among the AMF, the SMF, and the SGW includes: the UE initiates a connection request: the UE connects to a core network of a service provider via a wireless network; the AMF allocates a session ID: when the UE successfully connects to the core network, the AMF allocates a unique session ID and sends it to the SMF and the SGW; the SMF performs session management: after receiving the session ID, the SMF starts to manage the session of the UE, including allocating an IP address, traffic control, and the like; the SGW establishes a data transmission channel: after receiving the session ID, the SGW establishes a data transmission channel with the UE, so that the UE can communicate with the Internet or other networks; data transmission and traffic control: once the data transmission channel is established, the UE can start sending and receiving data. The SMF and the SGW manage and control data traffic to ensure efficient utilization of network resources; session termination and resource release: when the UE disconnects or the session ends, the AMF, the SMF, and the SGW release relevant session resources and perform necessary cleanup work. In this interaction process, the AMF is responsible for core network function management, the SMF is responsible for session management, and the SGW is responsible for data transmission and traffic control. The cooperation and interaction among them ensure that the user equipment can smoothly access and use various functions and services of the core network.

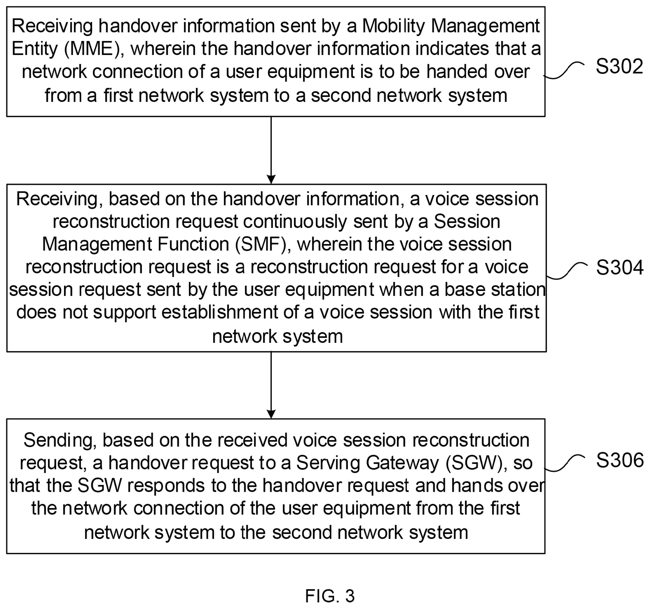

Embodiments of the present disclosure provide a method for processing handover of a network system, applied to an Access and Mobility Management Function entity (AMF). FIG. 3 is a flowchart of a method for processing handover of a network system according to an embodiment of the present disclosure. As shown in FIG. 3, the process includes the following steps:
Step S302: receiving handover information sent by a Mobility Management Entity (MME), wherein the handover information indicates that a network connection of a user equipment is to be handed over from a first network system to a second network system.

In the present embodiment, the MME usually sends handover information in an LTE (Long-Term Evolution) network. For example, the handover information is sent in the following scenarios: when the UE is handed over from one base station to another base station, the MME sends handover information to a new target base station; when the UE is handed over from an LTE network to other wireless networks (e.g., 3G or 2G), the MME sends handover information to a target wireless network; when the UE performs a cell handover under the same base station, the MME sends handover information to a target cell.

In the present embodiment, the handover information includes but is not limited to the following contents: target base station information: including information such as an identifier, a location, and a coverage range of the target base station; handover type: indicating whether the handover is based on radio signal quality, load balancing, or other reasons; handover parameters: for example, a handover threshold, handover admission conditions, and the like; handover command: an instruction instructing the AMF to perform the handover, including a time and a manner for handover to the target base station; handover result: including feedback information indicating success or failure of the handover. After receiving such handover information, the AMF may perform a handover action according to the instruction sent by the MME, so as to implement handover between different network systems, thereby improving communication quality and user experience.
Step S304: receiving, based on the handover information, a voice session reconstruction request continuously sent by a Session Management Function (SMF), wherein the voice session reconstruction request is a reconstruction request for a voice session request sent by the user equipment when a base station does not support establishment of a voice session with the first network system; and
step S306: sending, based on the received voice session reconstruction request, a handover request to a Serving Gateway (SGW), so that the SGW responds to the handover request and hands over the network connection of the user equipment from the first network system to the second network system.

The present embodiment is applicable to scenarios where there is a need to quickly recover a voice call service when cooperation among multiple network elements in a network system is abnormal. For example, non-roaming scenarios and roaming scenarios in a communication system of a 5G network system.

In an embodiment, the second network system is a network system with poorer network performance than the first network system. For example, the second network system is a 3G network system and the first network system is a 4G network system; the second network system is a 4G network system and the first network system is a 5G network system; or the second network system is a 5G network system and the first network system is a 6G network system. When initiating a voice session establishment request, the user equipment preferentially selects the first network system, and in the case of a failure in the first network system, hands over to the second network system to establish the voice session. The 4G network system is the fourth-generation mobile communication technology, which provides faster data transmission speed and higher network capacity than the previous-generation 3G network. It adopts LTE (Long Term Evolution) technology, which can support more device connections and provide more stable network connections. The 5G network system is the fifth-generation mobile communication technology, which is a new-generation network system that upgrades and improves the current 4G LTE network. The 5G network system has higher data transmission speed, lower latency, and larger capacity, can support more devices to connect simultaneously, and provides users with faster and more stable Internet experience.

For example, in the present embodiment, when a 5G device (e.g., a UE) initiates or receives a voice call in 5G NR, if 5G NR does not support voice services, or if all necessary voice functions have not yet been implemented in the telephony service and NG-RAN, or if voice resources are temporarily lacking in the NG-RAN, the handover processing (e.g., EPS Fallback) process of the present embodiment is triggered.

Through the above steps, in the case of an exception in the first network system during establishment of a voice session, the AMF can receive the handover information sent by the MME in time, receive, based on the handover information, the voice session reconstruction request continuously sent by the SMF, and send the handover request to the SGW; the SGW responds to the handover request and hands over the network connection of the user equipment from the first network system to the second network system. It is possible to quickly hand over to the second network system, and the second network system initiates establishment of the voice session, thereby shortening the user's voice waiting time and improving the success rate of the voice call. Therefore, the problem in the related art that a voice session cannot be quickly recovered when an exception occurs in establishing the voice session can be solved, achieving the effect that the establishment of the voice session can be quickly recovered when an exception occurs in establishing the voice session.

In an exemplary embodiment, before receiving, based on the handover information, the voice session reconstruction request continuously sent by the Session Management Function (SMF), the method further includes: the SMF starts a first timer in response to determining that the base station does not support establishment of a voice session of a 5G network system; and in response to a timing of the first timer exceeding a preset time, the SMF continuously sends the voice session reconstruction request to the AMF. The first timer is mainly used for the SMF to trigger reconstruction of a voice dedicated bearer, and the timing of the first timer can be flexibly configured based on different application scenarios. In the present embodiment, by starting the first timer, the SMF can send the voice session reconstruction request in a timely manner.

In an exemplary embodiment, after receiving the handover information sent by the Mobility Management Entity (MME), the method further includes: sending the handover information to the SMF, to instruct the SMF to send the voice session reconstruction request. In the present embodiment, when receiving the handover instruction from the AMF, the SMF can quickly trigger the process of reconstructing the voice dedicated bearer without waiting for dedicated bearer establishment initiated by a PCF (Policy Control Function), thereby accelerating the voice dedicated bearer establishment process.

In an exemplary embodiment, after sending, based on the received voice session reconstruction request, the handover request to the Serving Gateway (SGW), so that the SGW responds to the handover request and hands over the network connection of the user equipment from the first network system to the second network system, the method further includes: the SGW sends the voice session reconstruction request to a Packet Data Network Gateway (PGW); and in response to receiving the voice session reconstruction request, the PGW sends the voice session request to the base station.

In the present embodiment, that the PGW sends the voice session request to the base station in response to receiving the voice session reconstruction request includes: the PGW associates the voice session request and deletes the voice session request from the cache in response to detecting that a cache includes the voice session request matching the voice session reconstruction request; the PGW re-generates a target voice session request by using the associated voice session request and the voice session reconstruction request, and caches the target voice session request; and the PGW sends the target voice session request to the base station, to initiate reconstruction of the voice session request in the second network system. For example, when the PGW detects that a voice session dedicated bearer to be established exists during reconstruction of the 4G voice session, the PGW can, after reconstructing the voice session, immediately initiate establishment of the voice session dedicated bearer by itself without waiting for the PCF to initiate voice dedicated bearer establishment.

In an exemplary embodiment, that the PGW sends the target voice session request to the base station includes: the PGW starts a second timer; and the PGW sends the target voice session request to the base station according to triggering of the second timer. The duration of the second timer can be configured based on application scenarios. Through the triggering of the second timer, the PGW can send the voice session request in a timely manner, ensuring reconstruction of the voice session.

In an exemplary embodiment, during a process in which the network connection of the user equipment is being handed over from the first network system to the second network system, when the user equipment initiates a Tracking Area Update (TAU), it is determined that the MME is in an abnormal state, wherein the MME being in the abnormal state includes that, when the user equipment initiates the voice session request for the first time, the MME does not send the voice session request to the SGW. For example, since the MME does not initiate voice session handover to the SGW due to an exception, the user's 4G TAU fails, and then the user needs to re-initiate Attach in the 4G network system. The MME sends a Create Session Request to the SGW to initiate the Attach process, and the SGW sends a Create Session Request to the PGW to initiate the Attach process.

In an exemplary embodiment, after sending, in response to receiving the voice session reconstruction request, the handover request to the Serving Gateway (SGW), so that the SGW responds to the handover request and hands over the network connection of the user equipment from the first network system to the second network system, the method further includes: the MME sends a handover response message to the AMF, wherein the handover response message indicates that the network connection of the user equipment has been handed over to the second network system; and the AMF releases, based on the handover response message, the first network system to which the user equipment is connected. In the present embodiment, the first network system to which the user equipment is connected is released in time after the voice session is established, thereby saving network resources.

In an exemplary embodiment, sending, based on the received voice session reconstruction request, the handover request to the Serving Gateway (SGW), so that the SGW responds to the handover request and hands over the network connection of the user equipment from the first network system to the second network system includes: the AMF sends the handover request to the SGW in response to a number of times that the AMF has received the voice session reconstruction request being greater than a preset threshold, so that the SGW responds to the handover request and hands over the network connection of the user equipment from the first network system to the second network system. In the present embodiment, the preset threshold can be flexibly configured according to application scenarios, for example, 5 times or 10 times. In the present embodiment, by setting the number of times for the voice session reconstruction request, when an exception occurs in the network system, it is possible to hand over to other network systems in a timely manner for reconstruction of the voice session, thereby ensuring establishment of the voice session.

The present disclosure will be described below in detail with reference to specific embodiments.

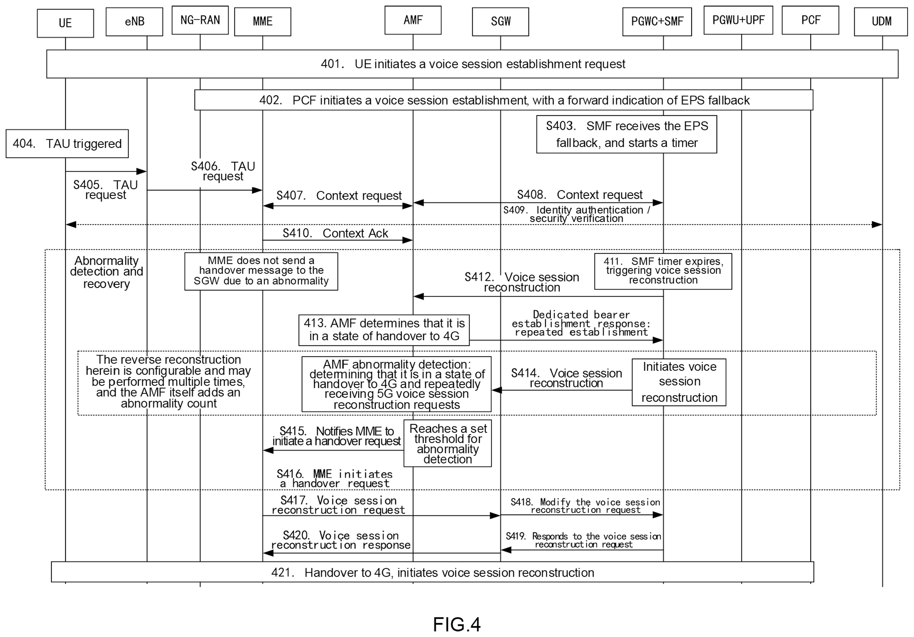

The present specific embodiment is described by taking a scenario in which a handover to a 4G network system is performed when an exception occurs in establishing a voice session in a 5G network system as an example, including a handover in a non-roaming scenario and a handover in a roaming scenario, which are as follows:
In the non-roaming scenario, a user uses a UE within the network range of the user's own operator to make a voice call. The process of the voice call includes: voice dialing, connection establishment, call connection, voice call in progress, and ending the voice call. During this process, various network elements in the communication network perform voice signal transmission and connection establishment through various protocols, so as to ensure stable voice communication between both parties. The network architecture among the various networks in the non-roaming scenario is shown in FIG. 2. In this network architecture, the UE preferentially connects to a 5G network system for a voice call. However, due to an exception occurring in the 5G network system, the voice call cannot obtain a response. To ensure connection of the voice call, the voice call needs to fall back from the 5G network system to the 4G network system for reconstruction of the voice call. When falling back from the 5G network system to the 4G network system for a voice call, the interaction process among the various network elements is shown in FIG. 4, including the following steps:
S401: the UE has completed registration and is in an online state, and the UE initiates a voice session establishment request.
S402: the PCF receives the voice session establishment request, and initiates a voice session establishment request to the base station. Since the base station does not support VoNR (Voice over New Radio, that is, the 5G voice technology commonly referred to), it returns an EPS fallback (Evolved Packet System fallback, that is, 5G voice service fallback to 4G) cause value to the SMF.
S403: the SMF receives the EPS fallback cause value, and starts a timer (a first timer) to trigger voice session reconstruction.
S404: the UE initiates a TAU (Tracking Area Update) process.
S405: the eNB (Evolved Node B) receives the TAU request.
S406: the eNB sends the TAU request to the MME.
S407: the MME responds to the TAU request and sends a context request to the AMF.
S408: the AMF responds to the context request.
S409: the AMF performs identity authentication or security verification on the context request.
S410: the MME replies a Context Ack (Acknowledge character) message to the AMF.
S411: the MME does not initiate network handover to the SGW due to an exception, and the SMF timer expires, triggering a voice session reconstruction request.
S412: the SMF notifies the AMF to perform voice session reconstruction.
S413: the AMF determines that it has received the indication of voice session reconstruction from the MME, and identifies that it is in a state of handover to the 4G network system, then replies to the SMF that voice session reconstruction is ongoing, indicating that a forward network element is performing handover of the network system.
S414: the SMF timer expires, and the SMF initiates voice session reconstruction again. A threshold is set inside the AMF system, for detecting whether the cumulative number of times in S413 (the number of times voice session establishment requests are received from the SMF during the handover process) exceeds the set threshold.
S415: the AMF detects that the exception reaches the set threshold, and the AMF is required to construct a new message (Hand Over To EPS Immediately Request) to notify the MME, so that the MME immediately initiates the handover process for voice session reconstruction.
S416: the MME receives the handover request from the AMF. When the MME determines that the Retrieve message has been acquired, it replies with a handover response to the AMF, adding a new message (Hand Over To EPS Immediately Response). Thereafter, the MME sends a handover message for the 4G network system to the SGW, to ensure that the handover process continues. Otherwise, it is considered that the 4G network system is abnormal, and the MME quickly triggers the user to re-register.
S417: the MME initiates a voice session reconstruction request to the SGW.
S418: the SGW modifies the voice session reconstruction request and sends it to the PGW.
S419: the PGW responds to the voice session reconstruction request.
S420: the SGW sends a voice session reconstruction response to the MME, completing the 4G part of the TAU process from the 5G network system to the 4G network system.
S421: after handover to the 4G network system, the PGW-C initiates the voice session reconstruction process.

The present embodiment addresses MME exceptions. The abnormal procedure can be recovered by means of an SMF reconstruction mechanism, an AMF detection mechanism, and cooperation among the AMF, the SMF, and the MME, which can improve the user's voice call experience.

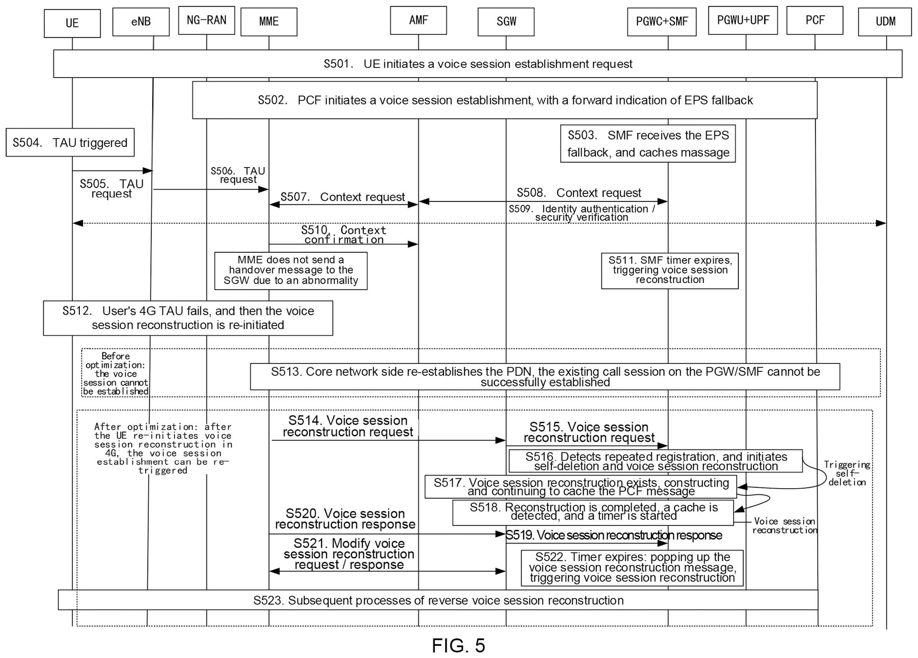

In the non-roaming scenario, after the user Tracking Area Update (TAU) fails, the process of triggering voice dedicated bearer establishment after PDN reconstruction from the 4G network system is shown in FIG. 5, specifically including the following steps:
S501: the UE has completed registration and is in an online state, and the UE initiates a voice session establishment request.
S502: the PCF receives the voice session establishment request, and initiates a voice session establishment request to the base station. Since the base station does not support VoNR, it returns an EPS fallback cause value to the SMF.
S503: the SMF receives the EPS fallback cause value, and starts a timer to trigger voice session reconstruction.
S504: the UE initiates a TAU trigger process.
S505: the eNB (Evolved Node B) receives the TAU request.
S506: the eNB sends the TAU request to the MME.
S507: the MME responds to the TAU request and sends a context request to the AMF.
S508: the AMF responds to the context request.
S509: the AMF performs identity authentication or security verification on the context request.
S510: the UE initiates the TAU process, and the MME replies a context confirmation message to the AMF.
S511: the SMF timer expires, triggering voice session reconstruction.
S512: the MME does not initiate handover to the SGW due to an exception, and the user's 4G TAU fails, and then voice session reconstruction is re-initiated in 4G.
S513: the core network side re-establishes the PDN, but the existing call session on the PGW/SMF cannot be successfully established.
S514: the MME sends a voice session reconstruction request to the SGW to initiate the voice session reconstruction process.
S515: the SGW sends the voice session reconstruction request to the PGW to initiate the voice session reconstruction process.
S516: the PGW detects that the user has re-registered, and triggers voice session self-release and voice session reconstruction, specifically implemented by: first sending an internal deletion, and then sending a session registration message to the PGW.
S517: the PGW receives the self-release message, detects that a voice session dedicated bearer establishment exists, and constructs and continues to cache a message for the PCF to reversely establish the voice session dedicated bearer.
S518: the PGW receives the voice session reconstruction message constructed by itself in step S516, and the PGW completes voice session reconstruction. If it detects that a reverse voice session dedicated bearer establishment cache message of the user exists, it starts a timer (with configurable duration), and initiates voice session dedicated bearer establishment again after voice session reconstruction.
S519: the SGW sends a voice session reconstruction response to the PGW.
S520: the MME sends a voice session reconstruction response to the SGW.
S521: the SGW and the MME complete subsequent processes of the user PDN voice session reconstruction.
S522: when the timer started in step S518 expires, the PGW retrieves the cached message and triggers voice session reconstruction again.
S523: subsequent processes of the voice session reconstruction are completed.

The present embodiment addresses MME exceptions, where the TAU fails and the user re-performs Attach in the 4G network system. When performing session reconstruction through the 4G network system, the cached voice dedicated bearer is identified and retained, ensuring that voice establishment is initiated immediately after reconstruction of the 4G network system, without waiting for a voice request from the PCF again, thereby improving the user's voice call experience.

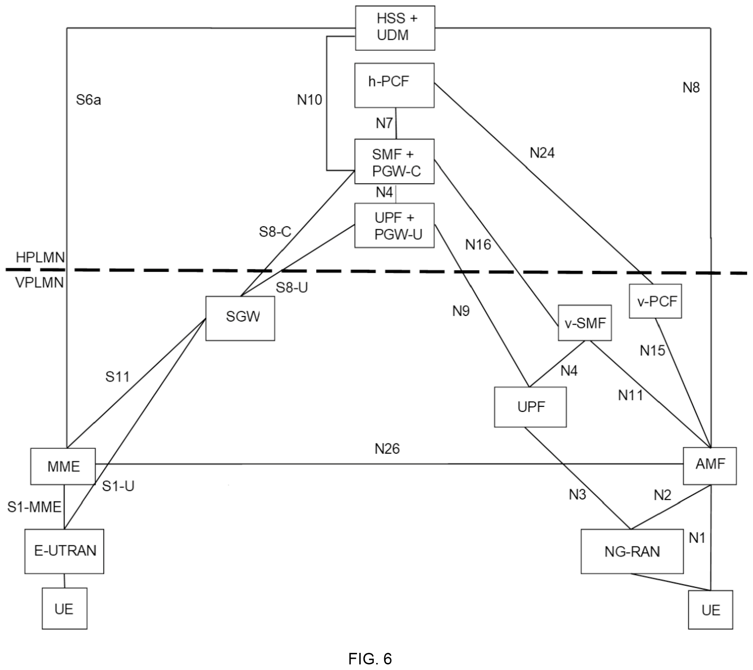

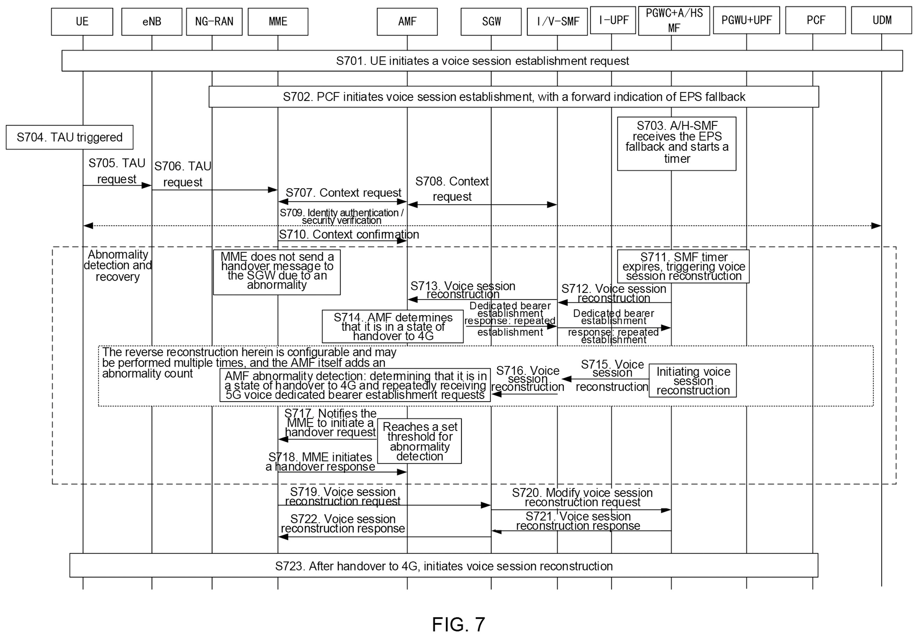

In the roaming scenario, a user uses a UE outside the network range of the user's own operator to make a voice call. The process of the voice call includes: starting and entering a communication application, selecting a contact to call, the UE automatically searching for network signals in the current area and connecting to the strongest signal tower, call connection, voice call in progress, and ending the voice call. During this process, various network elements in the communication network perform voice signal transmission and connection establishment through various protocols, so as to ensure stable voice communication between both parties. The network architecture among the various networks in the roaming scenario is shown in FIG. 6. In this network architecture, the UE preferentially connects to a 5G network system for a voice call. However, due to an exception occurring in the 5G network system, the voice call cannot obtain a response. To ensure connection of the voice call, the voice call needs to fall back from the 5G network system to the 4G network system for reconstruction of the voice call. When falling back from the 5G network system to the 4G network system for a voice call, the interaction process among the various network elements is shown in FIG. 7, including the following steps:
S701: the UE has completed registration and is in an online state, and the UE initiates a voice session establishment request.
S702: the PCF initiates a voice session establishment request, and since the base station does not support VoNR, it returns an EPS fallback cause value.
S703: the A/H-SMF receives the EPS fallback cause value, and starts a timer (a first timer) to trigger voice session reconstruction.
S704: the UE initiates a TAU trigger process.
S705: the eNB receives the TAU request.
S706: the eNB sends the TAU request to the MME.
S707: the MME responds to the TAU request and sends a context request to the AMF.
S708: the AMF responds to the context request.
S709: the AMF performs identity authentication or security verification on the context request.
S710: the MME replies a context confirmation message to the AMF.
S711: the MME does not initiate network handover to the SGW due to an exception, and the SMF timer expires, triggering voice session reconstruction.
S712: the A/H-SMF notifies the I/V-SMF (Intermediate or Visited SMF) to perform voice session reconstruction.
S713: the I/V-SMF notifies the AMF to perform voice session reconstruction.
S714: the AMF determines that it has received the indication from the MME, and identifies that it is in a state of handover to 4G, then replies "ongoing" to the I/V-SMF, indicating that a forward network element is performing handover, and the I/V-SMF notifies the A/H-SMF that the user is being handed over.
S715: the A/H-SMF timer expires, and the A/H-SMF initiates voice session reconstruction again, notifying the I/V-SMF of the voice session reconstruction.
S716: the I/V-SMF notifies the AMF of the voice session reconstruction. A threshold is set inside the AMF system, for detecting whether the cumulative number of times similar to the above steps S714-S715 (the number of times voice dedicated bearer establishment requests are received from the I/V-SMF during the handover process) exceeds the set threshold.
S717: the AMF detects that the exception reaches the set threshold, and in the present embodiment, the AMF is required to construct a new message (Hand Over To EPS Immediately Request) to notify the MME, so that the MME immediately initiates the handover process.
S718: the MME receives the handover request from the AMF. When the MME determines that the Retrieve message has been acquired, it replies with a handover response to the AMF, adding a new message (Hand Over To EPS Immediately Response). Thereafter, the MME sends a 4G handover message to the SGW, to ensure that the handover process continues. Otherwise, it is considered that the network system is abnormal, and the MME quickly triggers the user to re-register.
S719: the MME initiates a voice session reconstruction request to the SGW.
S720: the SGW modifies the voice session reconstruction request and initiates a voice session reconstruction request to the PGW-C.
S721: the PGW-C returns a modified voice session reconstruction response to the SGW.
S722: the SGW returns a voice session reconstruction response to the MME, completing the 4G part of the TAU process from 5G to 4G.
S723: after handover to 4G, the PGW-C initiates the voice session reconstruction process.

The present embodiment addresses MME exceptions. The abnormal procedure can be recovered by means of an A/H-SMF reconstruction mechanism, an AMF detection mechanism, and cooperation among the AMF, the I/V-SMF, the A/H-SMF, and the MME, which can improve the user's voice call experience.

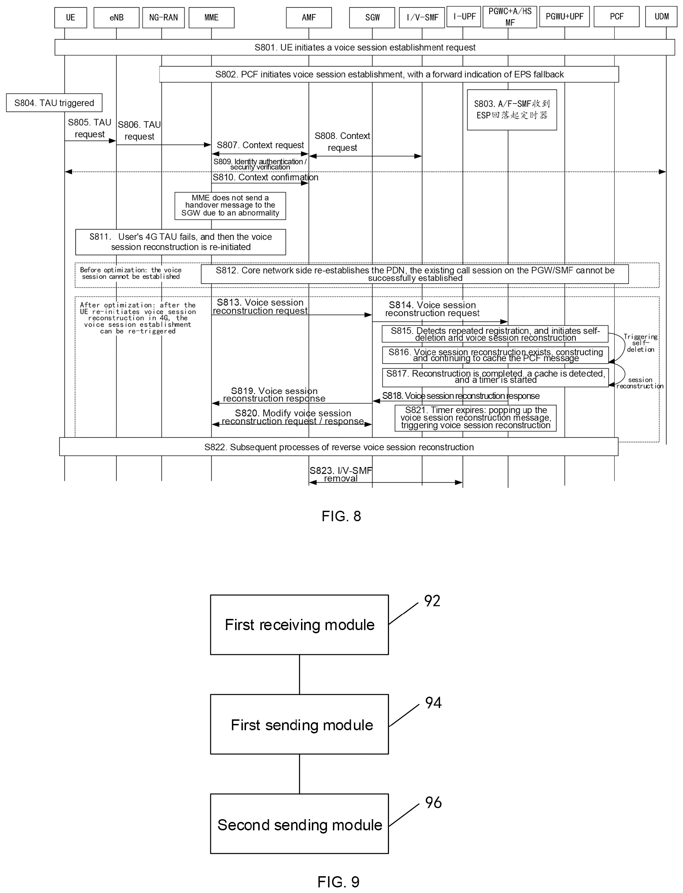

In the roaming scenario, after the user TAU fails, the process of triggering voice dedicated bearer establishment after PDN reconstruction from 4G is shown in FIG. 8, specifically including the following steps:
S801: the UE has completed registration and is in an online state, and the UE initiates a voice session establishment request.
S802: the PCF receives the voice session establishment request, and initiates a voice dedicated bearer establishment request to the base station. Since the base station does not support VoNR, it returns an EPS fallback cause value.
S803: the SMF receives the EPS fallback cause value, and starts a timer (a first timer) to trigger dedicated bearer reconstruction (that is, initiating a voice session reconstruction request).
S804: the UE triggers a TAU request process.
S805: the eNB receives the TAU request.
S806: the eNB sends the TAU request to the MME.
S807: the MME responds to the TAU request and sends a context request to the AMF.
S808: the AMF responds to the context request.
S809: the AMF performs identity authentication or security verification on the context request.
S810: the UE initiates the TAU process, and the MME replies a context confirmation message to the AMF.
S811: the MME does not initiate handover to the SGW due to an exception, and the user's 4G TAU fails, and then voice session reconstruction is re-initiated in 4G.
S812: the core network side re-establishes the PDN, but the existing call session on the PGW/SMF cannot be successfully established.
S813: the MME sends a voice session reconstruction request to the SGW to initiate the voice session reconstruction process.
S814: the SGW sends the voice session reconstruction request to the PGW to initiate the voice session reconstruction process.
S815: the PGW detects that the user has re-registered, and triggers voice session self-release and voice session reconstruction, specifically implemented by: first sending an internal deletion, and then sending a voice session registration message to the PGW itself.
S816: the PGW receives the voice session self-release message, detects that a voice session establishment exists, and constructs and continues to cache a message for the PCF to reversely establish the voice session dedicated bearer.
S817: the PGW receives the voice session reconstruction message constructed by itself in step S815, and the PGW completes voice session reconstruction. If it detects that a reverse voice session dedicated bearer establishment cache message of the user exists, it starts a timer (with configurable duration), and initiates voice session dedicated bearer establishment again after voice session reconstruction.
S818: the PGW-C returns a voice session reconstruction response to the SGW.
S819: the SGW returns a voice session reconstruction response to the MME.
S820: the SGW and the MME complete subsequent processes of the user PDN voice session reconstruction.
S821: when the timer started in step S817 expires, the PGW retrieves the cached message and triggers voice session reconstruction again.
S822: subsequent processes of the voice session reconstruction are completed.
S823: the I/V-SMF removal process is completed.

In summary, the present embodiment optimizes the EPS fallback abnormal procedures in the 4G network system and the 5G network system. When cooperation among multiple network elements is abnormal, the handover process from the 5G network system to the 4G network system is triggered in a timely manner through a retransmission and detection mechanism on the 5G side, so that the user continues to initiate voice dedicated bearer establishment after being handed over to the 4G network system, thereby shortening the user's voice waiting time and increasing the voice call success rate, and enhancing user experience. Meanwhile, exception optimization is performed on the 4G network system side. When the user's 4G TAU fails and the user re-performs Attach, the voice dedicated bearer to be established can be detected, and reconstruction is triggered immediately after the Attach process, thereby improving user experience.

From the description of the above implementations, those skilled in the art can clearly understand that the method according to the above embodiments can be implemented by means of software plus a necessary general hardware platform, and of course, by hardware, but in many cases the former is a better implementation. Based on such understanding, the technical solution of the present disclosure, in essence, or the part contributing to the prior art, may be embodied in the form of a software product. The computer software product is stored in a storage medium (such as ROM/RAM, a magnetic disk, or an optical disc), and includes several instructions for causing a terminal device (which may be a mobile phone, a computer, a server, or a network device, etc.) to execute the methods described in the various embodiments of the present disclosure.

An apparatus for processing handover of a network system is also provided in the present embodiment. The apparatus is configured to implement the above embodiments and preferred implementations, and those already described will not be repeated. As used below, the term "module" may implement a combination of software and/or hardware for predetermined functions. Although the apparatus described in the following embodiments is preferably implemented in software, implementations in hardware, or a combination of software and hardware, are also possible and contemplated.

FIG. 9 is a structural block diagram of an apparatus for processing handover of a network system according to an embodiment of the present disclosure. As shown in FIG. 9, the apparatus includes:
a first receiving module 92 configured to receive handover information sent by a Mobility Management Entity (MME), wherein the handover information indicates that a network connection of a user equipment is to be handed over from a first network system to a second network system;
a first sending module 94 configured to receive, based on the handover information, a voice session reconstruction request continuously sent by a Session Management Function (SMF), wherein the voice session reconstruction request is a reconstruction request for a voice session request sent by the user equipment when a base station does not support establishment of a voice session with the first network system; and
a second sending module 96 configured to send, based on the received voice session reconstruction request, a handover request to a Serving Gateway (SGW), so that the SGW responds to the handover request and hands over the network connection of the user equipment from the first network system to the second network system.

In an exemplary embodiment, the apparatus further includes: a first starting module configured to, before receiving, based on the handover information, the voice session reconstruction request continuously sent by the SMF, start, by the SMF, a first timer in response to determining that the base station does not support establishment of a voice session of a 5G network system; and a third sending module configured to, in response to a timing of the first timer exceeding a preset time, continuously send, by the SMF, the voice session reconstruction request to the AMF.

In an exemplary embodiment, the apparatus further includes: a fourth sending module configured to, after receiving the handover information sent by the MME, send the handover information to the SMF, to instruct the SMF to send the voice session reconstruction request.

In an exemplary embodiment, the apparatus further includes: a fifth sending module configured to, after sending, based on the received voice session reconstruction request, the handover request to the SGW, so that the SGW responds to the handover request and hands over the network connection of the user equipment from the first network system to the second network system, send, by the SGW, the voice session reconstruction request to a PGW; and a sixth sending module configured to, in response to receiving the voice session reconstruction request, send, by the PGW, the voice session request to the base station.

In an exemplary embodiment, the sixth sending module includes: a first attaching unit configured to, in response to detecting that a cache includes the voice session request matching the voice session reconstruction request, associate, by the PGW, the voice session request and delete the voice session request from the cache; a first generating unit configured to re-generate, by the PGW, a target voice session request by using the associated voice session request and the voice session reconstruction request, and cache, by the PGW, the target voice session request; and a first sending unit configured to send, by the PGW, the target voice session request to the base station, to initiate reconstruction of the voice session request in the second network system.

In an exemplary embodiment, the first sending unit includes: a first starting sub-unit configured to start, by the PGW, a second timer; and a first sending sub-unit configured to send, by the PGW, the target voice session request to the base station according to triggering of the second timer.

In an exemplary embodiment, during a process in which the network connection of the user equipment is being handed over from the first network system to the second network system, when the user equipment initiates a Tracking Area Update (TAU), it is determined that the MME is in an abnormal state, wherein the MME being in the abnormal state includes that, when the user equipment initiates the voice session request for the first time, the MME does not send the voice session request to the SGW.

In an exemplary embodiment, the apparatus further includes: a seventh sending module configured to, after sending, in response to receiving the voice session reconstruction request, the handover request to the SGW, so that the SGW responds to the handover request and hands over the network connection of the user equipment from the first network system to the second network system, send, by the MME, a handover response message to the AMF, wherein the handover response message indicates that the network connection of the user equipment has been handed over to the second network system; and a first releasing module configured to release, by the AMF, based on the handover response message, the first network system to which the user equipment is connected.

In an exemplary embodiment, the second sending module includes: a second sending unit configured to, in response to a number of times that the AMF has received the voice session reconstruction request being greater than a preset threshold, send, by the AMF, the handover request to the SGW, so that the SGW responds to the handover request and hands over the network connection of the user equipment from the first network system to the second network system.

It should be noted that the above various modules may be implemented by software or hardware. For the latter, they may be implemented in the following manner, but not limited thereto: the above modules are all located in the same processor; or, the above various modules are respectively located in different processors in any combination.

Embodiments of the present disclosure also provide a computer-readable storage medium, having a computer program stored therein, wherein the computer program is configured to, when being executed, implement steps of the method according to any one of the above method embodiments.

In an exemplary embodiment, the computer-readable storage medium may include, but is not limited to: a USB flash drive, a Read-Only Memory (ROM), a Random Access Memory (RAM), a removable hard disk, a magnetic disk, or an optical disc, and other various media that can store computer programs.

Embodiments of the present disclosure also provide an electronic device, including a memory and a processor, the memory having a computer program stored therein, wherein the processor is configured to execute the computer program to implement steps of the method according to any one of the above method embodiments.

In an exemplary embodiment, the electronic device may further include a transmission device and an input/output device, wherein the transmission device is connected to the processor, and the input/output device is connected to the processor.

For specific examples in the present embodiment, reference may be made to the examples described in the above embodiments and exemplary implementations, and details are not described herein again.

Obviously, those skilled in the art should understand that the various modules or steps of the present disclosure described above can be implemented by a general-purpose computing device, and they can be concentrated on a single computing device or distributed on a network composed of multiple computing devices. They can be implemented by program codes executable by the computing devices, so that they can be stored in a storage device and executed by the computing devices, and in some cases, the steps shown or described can be performed in a sequence different from that described herein, or they can be separately fabricated into individual integrated circuit modules, or multiple modules or steps among them can be fabricated into a single integrated circuit module. Thus, the present disclosure is not limited to any specific combination of hardware and software.

The above descriptions are only preferred embodiments of the present disclosure, and are not intended to limit the present disclosure. For those skilled in the art, various modifications and changes may be made to the present disclosure. Any modifications, equivalent substitutions, improvements, etc. made within the principle of the present disclosure should be included in the protection scope of the present disclosure.

## Claims

1. A method for processing handover of a network system, applied to an Access and Mobility Management Function entity (AMF), comprising:
receiving handover information sent by a Mobility Management Entity (MME), wherein the handover information indicates that a network connection of a user equipment is to be handed over from a first network system to a second network system;
receiving, based on the handover information, a voice session reconstruction request continuously sent by a Session Management Function (SMF), wherein the voice session reconstruction request is a reconstruction request for a voice session request sent by the user equipment when a base station does not support establishment of a voice session with the first network system; and
sending, based on the received voice session reconstruction request, a handover request to a Serving Gateway (SGW), so that the SGW responds to the handover request and hands over the network connection of the user equipment from the first network system to the second network system.

2. The method according to claim 1, wherein before receiving, based on the handover information, the voice session reconstruction request continuously sent by the SMF, the method further comprises:
in response to determining the base station not supporting establishment of a voice session of a 5G network system, starting a first timer by the SMF; and
in response to a timing of the first timer exceeding a preset time, continuously sending, by the SMF, the voice session reconstruction request to the AMF.

3. The method according to claim 1, wherein after receiving the handover information sent by the MME, the method further comprises:
sending the handover information to the SMF, to instruct the SMF to send the voice session reconstruction request.

4. The method according to claim 1, wherein after sending, based on the received voice session reconstruction request, the handover request to the SGW, so that the SGW responds to the handover request and hands over the network connection of the user equipment from the first network system to the second network system, the method further comprises:
sending, by the SGW, the voice session reconstruction request to a Packet Data Network Gateway (PGW); and
in response to receiving the voice session reconstruction request, sending, by the PGW, the voice session request to the base station.

5. The method according to claim 4, wherein in response to receiving the voice session reconstruction request, sending, by the PGW, the voice session request to the base station comprises:
in response to detecting that a cache includes the voice session request matching the voice session reconstruction request, associating, by the PGW, the voice session request and deleting the voice session request from the cache;
re-generating, by the PGW, a target voice session request by using the associated voice session request and the voice session reconstruction request, and caching, by the PGW, the target voice session request; and
sending, by the PGW, the target voice session request to the base station, to initiate reconstruction of the voice session request in the second network system.

6. The method according to claim 5, wherein sending, by the PGW, the target voice session request to the base station comprises:
starting a second timer by the PGW; and
sending, by the PGW, the target voice session request to the base station according to triggering of the second timer.

7. The method according to any one of claims 1 to 6, wherein during a process in which the network connection of the user equipment is being handed over from the first network system to the second network system, in response to the user equipment initiating a Tracking Area Update (TAU), it is determined that the MME is in an abnormal state, wherein the MME being in the abnormal state comprises that, when the user equipment initiates the voice session request for the first time, the MME does not send the voice session request to the SGW.

8. The method according to claim 1, wherein after sending, based on the received voice session reconstruction request, the handover request to the SGW, so that the SGW responds to the handover request and hands over the network connection of the user equipment from the first network system to the second network system, the method further comprises:
sending, by the MME, a handover response message to the AMF, wherein the handover response message indicates that the network connection of the user equipment has been handed over to the second network system; and
releasing, by the AMF, based on the handover response message, the first network system to which the user equipment is connected.

9. The method according to claim 1, wherein the sending, based on the received voice session reconstruction request, the handover request to the SGW, so that the SGW responds to the handover request and hands over the network connection of the user equipment from the first network system to the second network system comprises:
in response to a number of times that the AMF has received the voice session reconstruction request being greater than a preset threshold, sending, by the AMF, the handover request to the SGW, so that the SGW responds to the handover request and hands over the network connection of the user equipment from the first network system to the second network system.

10. A computer-readable storage medium, having a computer program stored therein, wherein the computer program is configured to, when being executed by a processor, implement steps of the method according to any one of claims 1 to 9.

11. An electronic device, comprising a memory, a processor, and a computer program that is stored in the memory and executable by the processor, wherein the processor is configured to, when executing the computer program, implement steps of the method according to any one of claims 1 to 9.
